# FASCICULE DE BREVET EUROPEEN

(11) **EP 2 936 395 B1**
(45) Date de publication et mention de la délivrance du brevet: **02.06.2021**
(21) Numéro de dépôt: 13814128.8
(22) Date de dépôt: 19.12.2013
(51) Int. Cl.: G06K 19/07

(54) **CARTE À PUCE MULTIFONCTIONS COMPORTANT UN CAPTEUR PHOTOVOLTAÏQUE**
MULTIFUNKTIONS-CHIPKARTE MIT PHOTOVOLTAIKSENSOR
MULTIFUNCTIONAL SMARTCARD COMPRISING A PHOTOVOLTAIC SENSOR

(30) Priorité: 20.12.2012 EP 12306642
(43) Date de publication de la demande: 28.10.2015
(73) Titulaire: Thales Dis France SA, 92190 Meudon (FR)
(72) Inventeur: FIDALGO, Jean-Christophe, 13705 La Ciotat (FR); LEIBENGUTH, Joseph, 13705 La Ciotat (FR); ROBLES, Laurence, 13705 La Ciotat (FR)
(74) Mandataire: Milharo, Emilien
(86) Numéro de dépôt international: PCT/EP2013/077543
(87) Numéro de publication internationale: WO 2014/096290

(56) Documents cités:
- WO-A1-2004/017256
- WO-A2-03/065393

## Description

L'invention concerne l'utilisation d'un capteur photovoltaïque transparent pour alimenter électriquement un support à puce tel une carte à puce, de préférence multifonctions. L'invention concerne également un procédé d'assemblage d'un tel support à puce, tel une carte à puce, de préférence multifonctions comportant ce capteur photovoltaïque transparent ou rendu transparent artificiellement notamment par effet d'optique.

On connaît des cartes à puces comportant multifonctions, qui comportent, en plus d'une puce électronique incluse dans un module à contact, des composants électroniques additionnels tels qu'un écran, un clavier, un circuit intégré ou une antenne radiofréquence. De tels composants électroniques permettent l'implémentation de fonctionnalités qui vont au-delà de celles offertes par une simple carte à puce, comme par exemple la consultation d'informations enregistrées dans la puce, ou encore la transmission de mots de passe à usage unique. Pour assurer le fonctionnement de ces composants, il est nécessaire d'intégrer une source d'énergie électrique dans la carte à puce pour alimenter ces composants. Classiquement, la source d'énergie est une batterie de type primaire qui n'a pas la possibilité de se recharger. Pour augmenter la durée de vie de ce type de produit, la source d'énergie peut être rechargeable et elle doit donc comporter un dispositif de collecte d'énergie (« energy harvesting » en langue anglaise).

Le brevet US 6561430 B2 décrit une telle carte à puce, dans laquelle un capteur photovoltaïque est configuré pour recharger une batterie destinée à alimenter électriquement de tels composants. Cette carte à puce comporte ainsi :
- un élément de corps de carte, de forme essentiellement plane ;
- un circuit intégré, placé dans l'élément de corps de carte ;
- un dispositif de stockage d'énergie rechargeable, connecté électriquement au circuit intégré pour alimenter électriquement ce circuit intégré ;
- un capteur photovoltaïque, s'étendant au moins partiellement sur une face de l'élément de corps de carte et étant électriquement connecté au dispositif de stockage d'énergie pour recharger ce dispositif de stockage d'énergie.

Cette carte présente cependant l'inconvénient que le capteur photovoltaïque présente un aspect peu esthétique et masque des informations visuelles typiquement inscrites en surface de la carte. Ces contraintes conduisent à réduire la superficie du capteur photovoltaïque, ce qui limite la puissance électrique apte à être récupérée pour alimenter électriquement le dispositif de stockage d'énergie.

Il existe donc un besoin pour une carte à puce multifonctions, comportant une source d'énergie solaire présentant un aspect amélioré.

Le document WO 03/065393 A2 décrit une cellule photovoltaïque intégrée sur une carte active telle une carte à puce. La cellule est disposée sur une base flexible transparente. La cellule comprend une ou plusieurs région(s) de liaison électrique qui peuvent être transparente(s) ou opaque(s) disposées entre différentes couches électriques .

Le document WO 2004/017256 A2 décrit une carte à puce avec une cellule photovoltaïque notamment polymère sur la surface de la carte à puce, pour une alimentation en énergie de la carte à puce intégrée. La cellule peut être semi-transparente, colorée ou opaque.

L'invention peut s'appliquer à des cartes à puce normale de type contact et/ou sans contact, support à puce quelconque notamment étiquette électronique. Le terme carte peut être équivalent ou substitué par le terme support.

L'invention concerne un support à puce selon la revendication 1.

Les modes de réalisation de l'invention peuvent présenter une ou plusieurs des caractéristiques suivantes :

L'ouverture constitue une fenêtre pour afficheur électronique, un évidement de matériau opaque, une perforation de matériau ou un via conducteur dans le matériau opaque ;

Le capteur photovoltaïque transparent s'étend sur au moins 70 % de la surface de l'élément de corps de carte.

Selon un autre aspect, l'invention porte également sur un procédé d'assemblage d'un support à puce selon la revendication 4.

Les modes de réalisation de l'invention peuvent présenter une ou plusieurs des caractéristiques suivantes :
- Le matériau électriquement conducteur comporte un film adhésif électriquement conducteur présentant des propriétés de conduction électriques anisotropes ;
- Le matériau électriquement conducteur comporte un élastomère électriquement conducteur sensible à la pression ;
- Le matériau électriquement conducteur comporte des particules métalliques ou particules d'élastomère électriquement conductrices liées par une pâte non électriquement conductrice.

L'invention a également pour objet un produit intermédiaire selon la revendication 9.

Ce produit intermédiaire permet de faciliter la fabrication car il est ainsi plus aisé de positionner des supports d'une pluralité de circuit et pluralité de capteurs photovoltaïques. Il est aussi plus aisé d'isoler (séparer) individuellement des capteurs sans risquer de découper ou altérer le matériau photovoltaïque. Le produit intermédiaire peut être sous forme de plaque ou notamment sous forme de ruban continu, comportant chacun une pluralité de capteurs photovoltaïques destinés à être individualisés.

L'invention sera mieux comprise à la lecture de la description qui va suivre, donnée uniquement à titre d'exemple non limitatif et faite en se référant aux dessins sur lesquels :
- la figure 1 est une illustration schématique, selon une vue écorchée, d'une carte à puce multifonctions ;
- la figure 2 est une illustration schématique d'une face avant de la carte à puce multifonctions de la figure 1 ;
- la figure 3 est une illustration schématique, selon le plan de coupe AA', de la carte à puce multifonctions de la figure 1.
- la figure 4 est un organigramme d'un procédé d'assemblage de la carte à puce multifonctions de la figure 1 ;
- la figure 5 illustre schématiquement une étape d'assemblage de la carte à puce multifonctions de la figure 1 ;
- la figure 6 est une illustration schématique, selon une vue de profil, d'un autre mode de réalisation de la carte à puce multifonctions de la figure 1, dans laquelle une bande magnétique est placée sur un capteur photovoltaïque de cette carte

Dans ces figures, les mêmes références sont utilisées pour désigner les mêmes éléments.

Dans la suite de cette description, les caractéristiques et fonctions bien connues de l'homme du métier ne sont pas décrites en détails.

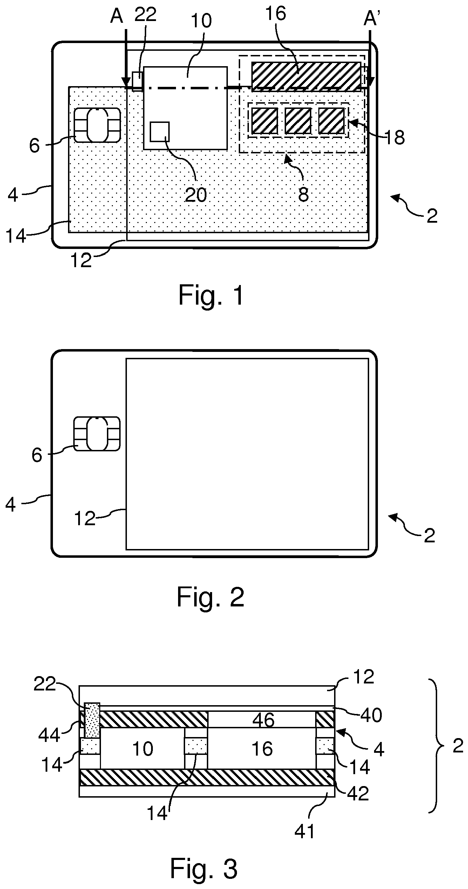

Les figures 1 et 2 représentent une carte à puce 2 multifonctions. Cette carte 2 comporte ici :
- un élément de corps de carte 4 (« inlay » en langue anglaise) ;
- un module à contact 6 comportant une puce électronique, intégré dans l'élément 4 et configuré pour être lu par un lecteur de carte à puce ;
- un circuit électronique 8 ;
- un dispositif 10 de stockage d'énergie, connecté électriquement au circuit 8 pour alimenter électriquement ce circuit 8 ;
- un capteur photovoltaïque 12 transparent ;
- un circuit imprimé flexible 14, intégré dans l'élément 4.

Pour simplifier la figure 1, des composants de la carte 2 superposés les uns sur les autres sont représentés de façon visible. Le détail de connexions électriques entre ces éléments de la carte 2 n'est pas représenté.

Dans cette description, un objet, tel qu'une couche d'un matériau, est dit transparente si cet objet présente, pour la lumière visible, un taux de transmission optique supérieur ou égal à 50 % ou à 60 % et, avantageusement, supérieur à 80 % ou à 90 %, en particulier selon une vision normale de la surface de cet objet, c'est à dire perpendiculairement par rapport à la surface de cet objet.

L'élément 4 présente ici une forme essentiellement plane. Les dimensions de l'élément 4 sont, par exemple, choisies pour que la carte 2 présente le format « ID-1 » défini par la norme internationale « ISO/IEC 7810:2003» publiée par l'Organisation internationale de normalisation. L'élément 4 présente ainsi une forme rectangulaire.

Dans cet exemple, le circuit 8 est configuré pour réaliser une fonction logique comportant l'échange de données avec la puce électronique du module 6.

Ici, le circuit 8 comporte une interface d'échange de données, configurée pour permettre la lecture et l'enregistrement de données enregistrées dans la puce électronique du module 6 par un utilisateur de la carte 2. A cet effet, le circuit 8 comporte un écran 16 et un clavier 18. Pour simplifier la figure 1, seules trois touches du clavier 18 sont illustrées. Cet écran 16 et cette interface 18 sont électriquement connectées à la puce électronique du module 6, par l'intermédiaire du circuit 14. L'écran 16 est ainsi configuré pour afficher des données comprises dans la puce électronique du module 6.

Le dispositif 10 est apte :
- à stocker de l'énergie, et
- à alimenter électriquement le circuit 8 avec cette énergie stockée.

Ce dispositif 10 est en outre apte à être rechargé par un apport d'énergie extérieur. Par exemple, le dispositif 10 comporte une batterie électrochimique rechargeable, telle qu'une batterie au lithium. Avantageusement, le dispositif 10 comporte également un système 20 de gestion de la batterie, configuré pour contrôler et optimiser le rechargement de la batterie. Le dispositif 10 est ici relié au circuit 8 par l'intermédiaire du circuit 14.

Le capteur 12 est configuré pour recharger électriquement le dispositif 10 lorsque ce capteur 12 est éclairé par une source de lumière. A cet effet, le capteur 12 est relié électriquement au dispositif 10 au moyen d'un connecteur électrique 22. Ce connecteur 22 peut comporter un matériau électriquement conducteur. Dans cet exemple, le connecteur 22 comporte un film d'un matériau adhésif électriquement conducteur, présentant des propriétés de conduction électriques anisotropes, tel que le matériau désigné sous la référence en langue anglaise « anisotropic conductive film » et commercialisé par exemple par les sociétés « 3M », « TESA » ou « Sony ». Ce matériau permet notamment la réalisation de la connexion électrique entre le capteur 12 et le dispositif 10, par simple pression mécanique, ce qui facilite l'assemblage de la carte 2. Ici, le connecteur 22 est électriquement relié au dispositif 10 par l'intermédiaire du circuit 14. Le connecteur 22 est à cet effet ici directement relié électriquement à une zone de connexion du circuit 14.

Le capteur 12 est placé sur une face extérieure de l'élément 4, du côté comportant le module 6, comme illustré sur la figure 2. Ce capteur 12 s'étend sur au moins 20 % ou 50 % de la superficie de cette face. Avantageusement, ce capteur 12 s'étend sur plus de 70 % ou 80 % de la superficie de cette face.

Le capteur 12 est au moins partiellement transparent en lumière visible. Par «partiellement transparent », on entend ici que le capteur 12 est transparent uniquement lorsque ce capteur est observé sous un angle d'observation appartenant à un intervalle donné.

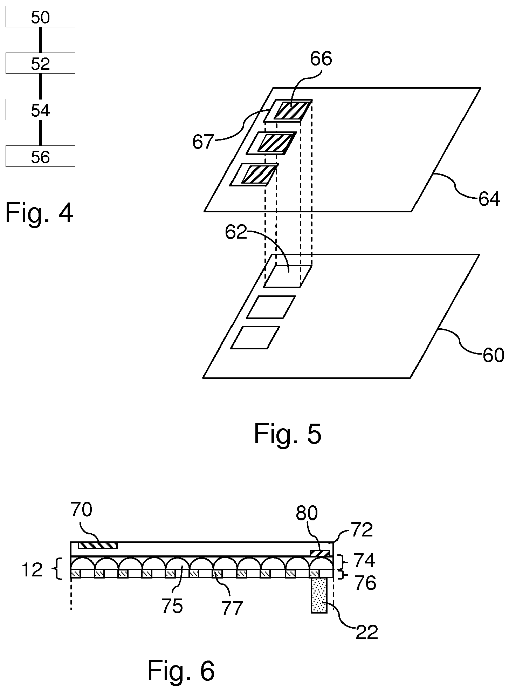

Dans cet exemple, le capteur 12 comporte un film photovoltaïque partiellement transparent proposé par la société « Wysips ». Le capteur 12 n'apparaît transparent que lorsqu'il est observé suivant des directions d'observation spécifique. Dans cet exemple, ce capteur 12 comporte une feuille 76 (figure 6) d'un matériau photovoltaïque, contrecollé à une feuille 74 de lentilles optiques lenticulaires 75 au moyen d'une colle transparente. Les lentilles optiques correctement agencées par rapport à des zones de capteurs permettent d'obtenir une transparence des zones de capteur photovoltaïque par effet d'optique connu de l'homme de l'art. Ce matériau photovoltaïque est disposé sous forme de bandes 77, essentiellement parallèles et superposées aux lentilles 75, de manière à ce que ces lentilles 75 limitent la visibilité de ces bandes 77 pour un observateur de la carte 2, tout en permettant à de la lumière éclairant la carte 2 d'atteindre ces bandes 77 pour générer de l'électricité. Ainsi, le capteur 12 est avantageusement transparent pour un rayonnement lumineux présentant un angle d'incidence inférieur ou égal à 20°, ou à 25°, ou à 30°, ou à 35° par rapport à une direction normale au capteur 12 et selon un côté donné de la carte 2.

Dans cet exemple, les bandes de matériau photovoltaïque comportent des électrodes qui sont reliées électriquement au connecteur 22.

La figure 3 représente plus en détail la carte 2 et ce capteur 12. Le capteur 12 s'étend ici sur la face supérieure de l'élément 4, parallèlement à l'élément 4 et au circuit 14. Ainsi, le capteur 12 est partiellement transparent en lumière visible. En l'occurrence, ici, le capteur 12 est transparent pour un rayonnement lumineux :
- en lumière visible,
- présentant un angle d'incidence, défini par rapport à une direction normale au plan dans lequel s'étend essentiellement le capteur 12.

Avantageusement, l'élément 4 comporte des couches d'illustration 40 et 41. Ces couches 40 et 41 présentent par exemple des motifs graphiques tels qu'un logo ou des caractères alphanumériques destinés à être visibles par un utilisateur de la carte 2. A cet effet, ces couches 40 et 41 sont ici placées sur des faces extérieures de l'élément 4. La couche 40 est placée sur la face avant de l'élément 4, sous le capteur 12. Ces couches 40 et 41 sont ici identiques. Aussi, seule la couche 40 sera décrite en détail par la suite. Cette couche 40 comporte ici une fine couche opaque imprimée, recouverte par un revêtement transparent de protection (dit « overlay » en langue anglaise). Ce revêtement transparent de protection est ici réalisé en matière plastique transparente, telle que le polycarbonate ou le polytéréphtalate d'éthylène (PET) ou encore le polychlorure de vinyle (PVC). Ici, le revêtement de protection de la couche 40 est contigu au capteur 12.

L'élément 4 comporte avantageusement une couche opaque de support pour, notamment, l'incorporation de composants du circuit 8 ou du circuit 14 dans l'élément 4. Ici, l'élément 4 comporte des couches opaques 42, 44, entre lesquelles sont notamment disposés le dispositif 10, le circuit 14 et l'écran 16. La couche 44, ménagée au-dessus de l'écran 16, comporte une fenêtre transparente 46 permettant la visualisation de l'écran. Les couches 42 et 44 présentent chacune une épaisseur comprise entre 100µm et 200 µm. Ces couches 42, 44 sont par exemple réalisées en matière plastique, telle que du polycarbonate ou du PET ou encore du PVC.

Un exemple de procédé d'assemblage de la carte 2 va maintenant être décrit, en référence à l'organigramme de la figure 4 et à l'aide des figures 1 à 3 et 5.

Lors d'une étape 50, un élément de corps de carte multifonctions est fourni, dépourvu notamment de capteur photovoltaïque. Par exemple, un film 60 de matière plastique est fourni, apte à être découpé en zones 62 lors d'étapes ultérieures du procédé pour former l'élément 4. Pour simplifier la figure, seules trois telles zones sont illustrées.

Lors d'une étape 52, un matériau électriquement conducteur est déposé sur une face de la carte fournie et, de préférence, uniquement sur la zone de connexion du circuit 14. Ce matériau est apte à former le connecteur 22 lors d'une étape ultérieure du procédé. Par exemple, ce matériau est le matériau adhésif électriquement conducteur précédemment décrit.

Lors d'une étape 54, le capteur 12 est fourni et placé sur une face de la carte fournie. Par exemple, un film 64 est fourni, comportant un support transparent sur lequel des zones photovoltaïques 66 sont ménagées. Chacune de ces zones 66 est apte à former le capteur 12, après découpe, lors d'une étape ultérieure du procédé. Pour simplifier la figure, seules trois telles zones sont illustrées. Ici, le film est étendu sur une partie de la face supérieure de l'élément 4. En particulier, le capteur 12 est placé de manière à être en contact avec le matériau déposé pour former le connecteur 22, de manière à établir une connexion électrique entre le dispositif 10 et le capteur 12 pour alimenter électriquement ce dispositif 10. Ici, ce film 64 comporte les lentilles 75 sur toute sa superficie et ne comporte les bandes 77 que sur les zones 66. Des zones 67 sont aptes à être découpées autour de chacune des zones 66. Chacune de ces zones 67 est apte à être superposée à une seule zone 62 lorsque les films 60 et 64 sont superposés.

Lors d'une étape 56, la carte 2 est assemblée. Par exemple, un procédé de laminage est appliqué sur l'ensemble comportant la carte et le capteur 12 fournis, de manière à les assembler mécaniquement entre eux. Lors de ce laminage, ici, le connecteur 22 est formé. Dans cet exemple, les films 60 et 64 sont assemblés par laminage, après superposition des zones 62 et 67, puis sont découpés pour former des cartes 2.

De nombreux autres modes de réalisation sont possibles.

En variante, le circuit 8 est configuré pour fonctionner indépendamment de la puce électronique du module 6.

Le circuit 8 peut comporter autre chose qu'un écran. Par exemple, le circuit 8 comporte un ou plusieurs des éléments suivants : un lecteur d'empreintes digitales, ou une antenne radiofréquence, ou un transducteur, ou une horloge à quartz, ou un module de pilotage (« driver » en langue anglaise) de l'écran 16, ou un module d'enregistrement de données, ou un microprocesseur, ou encore un système pour générer et afficher un mot de passe à usage unique. La carte 2 peut comporter plusieurs tels circuits électroniques.

En variante, le dispositif 10 est un condensateur ou un supercondensateur.

Le capteur 12 peut être placé ailleurs que sur la face avant de l'élément 4. Le capteur 12 peut être placé sur plus d'une face de l'élément 4. La carte 2 peut également comporter plusieurs capteurs photovoltaïques indépendants et identiques au capteur 12, placés sur une ou plusieurs faces de l'élément 4. Dans ce cas, ces capteurs photovoltaïques sont électriquement reliés au dispositif 10 afin de permettre le rechargement du dispositif 10.

Le capteur 12 peut comporter un substrat transparent flexible en polymère tel que du polycarbonate ou du polytéréphtalate d'éthylène.

Les bandes de matériau photovoltaïque du capteur 12 peuvent être connectées différemment au connecteur 22. Par exemple, ces bandes présentent chacune deux électrodes, reliées au connecteur 22. Cela permet que toutes ces bandes soient électriquement connectées au connecteur 22 lorsque certaines de ces bandes présentent une discontinuité, par exemple lorsqu'il est nécessaire de découper une ouverture dans le capteur 12 pour que le module 6 ne soit pas recouvert par le capteur 12.

Le capteur 12 peut être réalisé différemment. Par exemple, le capteur 12 comporte un film d'un matériau photovoltaïque transparent, tel que du silicium amorphe ou un matériau photovoltaïque organique transparent en lumière visible. Par exemple, le capteur 12 comporte la cellule photovoltaïque décrite dans l'article de R. Lunt et al. « Transparent, near-infrared organic photovoltaic solar cells for window and energy-scavenging applications », Applied Physics Letter. vol. 98, p. 113305, 2011.

Le capteur 12 peut être en partie transparent pour un rayon lumineux présentant une direction et/ou un angle d'incidence quelconques. Le capteur 12 peut également être transparent.

Le capteur 12 peut être collé à l'élément 4 au moyen d'une colle liquide ou d'un matériau adhésif transparents, de façon à réduire le risque de désolidarisation de l'élément et du capteur 12.

Le connecteur 22 peut être réalisé à partir d'un matériau différent de celui décrit. Par exemple, le connecteur 22 comporte un élastomère électriquement conducteur, tel qu'une pâte de silicone comportant de l'argent. Le connecteur 22 peut comporter des particules métalliques (comme des particules d'argent, de cuivre ou de nickel) liées par une pâte n'étant pas électriquement conductrice. Ces particules métalliques peuvent également être des particules d'un matériau polymère recouvertes de métal.

Le connecteur 22 peut également être réalisé sans apport additionnel d'un matériau électriquement conducteur, en soudant entre eux des moyens de connexion déjà présents sur l'un ou l'autre du capteur 12 et de la zone de connexion du circuit 14, par exemple, lors de l'étape 56, au moyen d'un procédé de soudage direct par ultrasons ou par thermo-compression. Dans ce cas, l'étape 52 de dépôt d'un matériau électriquement conducteur est omise.

La couche 40 peut n'être présente que sur une seule des faces de l'élément 4. La couche 40 peut également être omise. Le revêtement transparent de protection de cette couche 40 peut être omis lorsque cette couche 40 est placée sous le capteur 12. Lorsque la couche 40 est placée sous le capteur 12, le revêtement transparent de protection de cette couche 40 peut comporter un motif imprimé pour masquer le connecteur 22.

Les emplacements et les dimensions de zones 66 peut être adapté en fonction des emplacements et des dimensions des zones 62.

La carte 2 peut comporter une bande magnétique 70 de stockage de données placée sur une face comportant le capteur 12, comme illustré sur la figure 6. Dans ce cas, cette bande 70 est déposée sur un revêtement transparent de protection 72, placé en surface du capteur 12. Ce revêtement 72 est par exemple identique au revêtement de protection de la couche 40. Ce revêtement 72 peut également comporter une zone opaque 80, située au-dessus du connecteur 22, pour masquer visuellement ce connecteur, de façon à ce qu'il ne puisse pas être vu par un utilisateur de la carte. Cette zone 80 est ici imprimée sur la face du revêtement 72 en contact avec le capteur 12.

La couche ou feuille opaque peut être disposée au moins pour masquer un élément de circuit ou tout autre élément électrique ou non. Cela peut être le cas notamment d'un support de type sans contact notamment à antenne, tel une étiquette électronique RFID, (notamment HF ou UHF).

Ainsi, grâce à l'invention on peut disposer d'une surface de capture d'énergie maximale, ainsi qu'une surface de présentation d'information maximale.

D'une manière générale, les capteurs photovoltaïques peuvent servir aussi à effectuer la communication avec la puce du support par technologie LIFI (light fidelity) proposé par la société Wysips ou Sunpartner. L'antenne de communication et/ou réception d'énergie peut être facultative.

Un écran ou dispositif d'affichage permanent ou non (impression ou affichage électronique) peut être placé sous les capteurs photovoltaïques (ou le produit intermédiaire).

## Revendications

1. Support à puce (2) comportant :
- un élément de corps de support (4), tel un corps de carte, comportant un circuit imprimé 14,
- un capteur photovoltaïque (12) au moins partiellement transparent pour la lumière visible s'étendant au moins partiellement au dessus d'une face de l'élément de corps de support et étant électriquement connecté au circuit imprimé par une connexion électrique;
- une couche ou feuille de matériau opaque pour la lumière visible,
**caractérisé en ce que** la couche ou feuille de matériau opaque pour la lumière visible est située entre le circuit imprimé et le capteur photovoltaïque (12) et masquant au moins en partie le circuit imprimé, et
**en ce que** ladite connexion électrique s'étend à travers une ouverture dans la feuille ou couche opaque.

2. Support à puce (2) selon la revendication 1, **caractérisée en ce que** l'ouverture constitue une fenêtre pour afficheur électronique, un évidement de matériau opaque, une perforation de matériau ou un via conducteur dans le matériau opaque.

3. Support selon l'une des revendications précédentes, dans laquelle le capteur photovoltaïque transparent (12) s'étend sur au moins 70 % de la surface de l'élément de corps de carte (4).

4. Procédé d'assemblage d'un support à puce comportant un capteur photovoltaïque transparent, comportant l'assemblage par lamination ou pressage d'un ensemble comportant :
- au moins un élément de corps de support (4), comportant un circuit imprimé 14,
- au moins un capteur photovoltaïque (12) au moins partiellement transparent pour la lumière visible et placé de manière à s'étendre au moins partiellement au dessus d'une face de l'élément de corps de support, ledit capteur comportant au moins une zone de connexion électrique destinée à être électriquement connecté au circuit imprimé par une connexion électrique;
- au moins une couche ou feuille de matériau opaque pour la lumière visible, **caractérisé en ce que** la couche ou feuille de matériau opaque pour la lumière est placée entre le circuit imprimé et le capteur photovoltaïque (12) et masquant au moins en partie le circuit imprimé, et **en ce que** le procédé comprend une étape de formation d'une connexion électrique à travers une ouverture dans la feuille ou couche opaque.

5. Procédé selon la revendication 4, dans lequel le procédé comporte en outre le dépôt (52) d'un matériau électriquement conducteur sur une face de l'élément de corps de carte et/ou sur la zone de connexion du capteur photovoltaïque, ce matériau électriquement conducteur étant apte à former un connecteur électrique entre le circuit électronique et le capteur photovoltaïque transparent lors du pressage (56).

6. Procédé selon la revendication 5, dans lequel le matériau électriquement conducteur comporte un film adhésif électriquement conducteur présentant des propriétés de conduction électriques anisotropes.

7. Procédé selon la revendication 5, dans lequel le matériau électriquement conducteur comporte un élastomère électriquement conducteur sensible à la pression.

8. Procédé selon la revendication 5, dans lequel le matériau électriquement conducteur comporte des particules métalliques ou de polymère métallisé liées par une pâte non électriquement conductrice.

9. Produit intermédiaire comportant au moins un capteur photovoltaïque transparent destiné à la fabrication de support à puce selon la revendication 1 ou mise en œuvre du procédé d'assemblage du support à puce selon la revendication 4, **caractérisé en ce qu'**il comprend une feuille support définissant une zone de capteur photovoltaïque transparent (66) et une zone de découpe (67), disposée autour de la zone de capteur (66), dépourvue de capteur et destinée à être découpée.

## Patentansprüche

1. Chipträger (2) bestehend aus:
- einem Trägerkörperelement (4), wie beispielsweise einem Kartenkörper, umfassend eine gedruckte Schaltung (14),
- einem Photovoltaiksensor (12), der für das sichtbare Licht mindestens teilweise transparent ist und sich mindestens teilweise über eine Seite des Trägerkörperelements erstreckt und durch eine elektrische Verbindung elektrisch mit der gedruckten Schaltung verbunden ist;
- einer für das sichtbare Licht opaken Materialschicht oder -lage, **dadurch gekennzeichnet, dass** sich die für das sichtbare Licht opake Materialschicht oder -lage zwischen der gedruckten Schaltung und dem Photovoltaiksensor (12) befindet und die gedruckte Schaltung mindestens teilweise maskiert,
und dass sich die elektrische Verbindung über eine Öffnung in der opaken Lage oder Schicht erstreckt.

2. Chipträger (2) nach Anspruch 1, **dadurch gekennzeichnet, dass** die Öffnung ein Fenster für eine elektronische Anzeige, eine Aussparung aus opakem Material, eine Materialperforation oder eine leitende Durchkontaktierung im opaken Material darstellt.

3. Träger nach einem der vorhergehenden Ansprüche, wobei sich der transparente Photovoltaiksensor (12) über mindestens 70 % der Oberfläche des Kartenkörperelements (4) erstreckt.

4. Verfahren zum Zusammenbau eines Chipträgers mit einem transparenten Photovoltaiksensor, umfassend den Zusammenbau durch Laminieren oder Pressen einer Anordnung, umfassend:
- mindestens ein Trägerkörperelement (4), umfassend eine gedruckte Schaltung (14),
- mindestens einen Photovoltaiksensor (12), der für sichtbares Licht mindestens teilweise transparent und so angeordnet ist, dass er sich mindestens teilweise über einer Seite des Trägerkörperelements erstreckt, wobei der Sensor mindestens eine elektrische Verbindungszone umfasst, die durch eine elektrische Verbindung zum elektrischen Verbinden mit der gedruckten Schaltung vorgesehen ist;
- mindestens eine für sichtbares Licht opake Materialschicht oder -lage, **dadurch gekennzeichnet, dass** die für das Licht opake Materialschicht oder -lage zwischen der gedruckten Schaltung und dem Photovoltaiksensor (12) platziert ist und die gedruckte Schaltung mindestens teilweise maskiert,
und dass das Verfahren einen Schritt des Bildens einer elektrischen Verbindung durch eine Öffnung in der opaken Lage oder Schicht umfasst.

5. Verfahren nach Anspruch 4, wobei das Verfahren ferner das Abscheiden (52) eines elektrisch leitenden Materials auf einer Seite des Kartenkörperelements und/oder auf der Verbindungszone des Photovoltaiksensors umfasst, wobei dieses elektrisch leitende Material in der Lage ist, einen elektrischen Anschluss zwischen der elektronischen Schaltung und dem transparenten Photovoltaiksensor während des Pressens (56) zu bilden.

6. Verfahren nach Anspruch 5, wobei das elektrisch leitende Material einen elektrisch leitenden Klebefilm umfasst, der anisotrope elektrische Leitungseigenschaften aufweist.

7. Verfahren nach Anspruch 5, wobei das elektrisch leitende Material ein elektrisch leitendes druckempfindliches Elastomer umfasst.

8. Verfahren nach Anspruch 5, wobei das elektrisch leitende Material metallische oder metallisierte Polymerpartikel umfasst, die durch eine nicht elektrisch leitende Paste gebunden sind.

9. Zwischenprodukt, umfassend mindestens einen transparenten Photovoltaiksensor, der zur Herstellung eines Chipträgers nach Anspruch 1 oder zur Implementierung des Verfahrens zum Zusammenbau des Chipträgers nach Anspruch 4 vorgesehen ist, **dadurch gekennzeichnet, dass** es eine Trägerfolie umfasst, die eine transparente Photovoltaiksensorzone (66) und eine Ausschnittzone (67) definiert, die um die Sensorzone (66) herum angeordnet ist, keinen Sensor enthält und zum Ausschneiden vorgesehen ist.

## Claims

1. A chip support (2) comprising:
- a support body element (4), such as a card body, comprising a printed circuit (14),
- a photovoltaic sensor (12) at least partially transparent to visible light, extending at least partially over one face of the support body element and being electrically connected to the printed circuit by an electrical connection;
- a layer or sheet of material opaque to visible light, **characterised in that** the layer or sheet of material opaque to visible light is located between the printed circuit and the photovoltaic sensor (12) and at least partially masking the printed circuit,
and **in that** said electrical connection extends through an opening in the opaque sheet or layer.

2. The chip support (2) according to claim 1, **characterised in that** the opening constitutes a window for an electronic display, a recess of opaque material, a perforation of material or a conductive via in the opaque material.

3. The support according to one of the preceding claims, wherein the transparent photovoltaic sensor (12) extends over at least 70% of the surface of the card body element (4).

4. A method for assembling a chip support comprising a transparent photovoltaic sensor, comprising the assembly by lamination or pressing of an assembly comprising:
- at least one support body element (4), comprising a printed circuit (14),
- at least one photovoltaic sensor (12) that is at least partially transparent to visible light and placed so as to extend at least partially over one face of the support body element, said sensor comprising at least one zone of electrical connection intended to be electrically connected to the printed circuit by an electrical connection;
- at least one layer or sheet of material opaque to visible light, **characterised in that** the layer or sheet of opaque material is placed between the printed circuit and the photovoltaic sensor (12) and at least partially masking the printed circuit,
and **in that** the method comprises a step of forming an electrical connection through an opening in the opaque sheet or layer.

5. The method according to claim 4, wherein the method further comprises depositing (52) an electrically conductive material on one face of the card body element and/or on the connection zone of the photovoltaic sensor, this electrically conductive material being able to form an electrical connector between the electronic circuit and the transparent photovoltaic sensor during pressing (56).

6. The method according to claim 5, wherein the electrically conductive material comprises an electrically conductive adhesive film exhibiting anisotropic electrical conduction properties.

7. The method according to claim 5, wherein the electrically conductive material comprises an electrically conductive pressure-sensitive elastomer.

8. The method according to claim 5, wherein the electrically conductive material comprises metallised polymer or metal particles bonded by a non-electrically conductive paste.

9. An intermediate product comprising at least one transparent photovoltaic sensor intended for manufacturing a chip support according to claim 1 or for implementing the method for assembling the chip support according to claim 4, **characterised in that** it comprises a support sheet defining a transparent photovoltaic sensor zone (66) and a cut-out zone (67), arranged around the sensor zone (66), devoid of sensor and intended to be cut.
